(19) Europäisches Patentamt
European Patent Office
Office européen des brevets

(11) Veröffentlichungsnummer: **0 054 195 B1**

# (12) EUROPÄISCHE PATENTSCHRIFT

(45) Veröffentlichungstag der Patentschrift: **16.05.84**

(51) Int. Cl.³: **C 07 F 9/38**

(21) Anmeldenummer: **81109762.5**

(22) Anmeldetag: **19.11.81**

## (54) Verfahren zur Herstellung von 1-Amino-alkan-1,1-diphosphonsäure.

(30) Priorität: **13.12.80 DE 3047107**

(43) Veröffentlichungstag der Anmeldung: **23.06.82 Patentblatt 82/25**

(45) Bekanntmachung des Hinweises auf die Patenterteilung: **16.05.84 Patentblatt 84/20**

(84) Benannte Vertragsstaaten: **BE CH DE FR GB IT LI NL**

(56) Entgegenhaltungen:
**DE - A - 2 203 340**
**DE - A - 2 625 767**
**GB - A - 1 192 802**

(73) Patentinhaber: **HOECHST AKTIENGESELLSCHAFT, Postfach 80 03 20, D-6230 Frankfurt am Main 80 (DE)**

(72) Erfinder: **Klose, Werner, Dr., Grachtstrasse 14, D-5042 Erftstadt (DE)**
Erfinder: **Auel, Theodor, Dr., Winzerstrasse 3, D-6803 Edingen (DE)**

EP 0 054 195 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zur Herstellung von 1-Aminoalkan-1,1-diphosphonsäure

1-Aminoalkandiphosphonsäuren sowie ihre stickstoffsubstituierten Derivate finden als Komplexbildner und Sequestrierungsmittel allein oder auch in Kombination mit anderen Chelatbildnern oder Stabilisatoren auf den verschiedensten Gebieten Anwendung, wie z. B. in der Wasserbehandlung, in der Papierherstellung, auf dem Textilsektor sowie bei Wasch- und Reinigungsmitteln.

Nach der DE-PS 2 048 913 werden 1-Aminoalkan-1,1-diphosphonsäuren durch Umsetzung von organischen Nitrilen mit phosphoriger Säure in Gegenwart von Halogenwasserstoff bei Temperaturen bis zu etwa 100° C hergestellt. Bei diesem Verfahren wird die technisch wichtige 1-Aminoethan-1,1-diphosphonsäure mit einer Ausbeute von nur etwa 47%, bezogen auf die eingesetzte phosphorige Säure, erhalten. Darüber hinaus erfordert dieses Verfahren wegen der Anwesenheit der stark korrosiv wirkenden Halogenwasserstoffe zusätzlichen apparativen Aufwand.

Weiterhin beschreibt die DE-PS 2 625 767 ein Verfahren zur Herstellung von 1-Aminoalkan-1,1-diphosphonsäuren durch Reaktion von Nitrilen mit phosphoriger Säure bei erhöhten Temperaturen von 140—200° C. Bei diesem Verfahren wird auf die Anwesenheit der korrosiven Halogenwasserstoffsäuren verzichtet.

Die Wirtschaftlichkeit beider Verfahren wird jedoch durch die stark angestiegenen Kosten für die als Ausgangsmaterial einzusetzenden Nitrile in zunehmendem Maße beeinträchtigt.

Gegenstand der vorliegenden Erfindung ist nunmehr ein Verfahren zur Herstellung von 1-Aminoalkan-1,1-diphosphonsäuren, das die Nachteile der bekannten Verfahren vermeidet, indem einmal auf die Anwesenheit von Halogenwasserstoffsäuren im Reaktionsgemisch verzichtet werden kann und zum anderen preiswertere Ausgangsstoffe eingesetzt werden.

Gegenstand der Erfindung ist ein Verfahren zur Herstellung von 1-Aminoalkan-1,1-diphosphonsäuren der allgemeinen Formel (I)

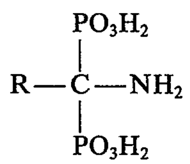

(I)

in welcher R einen geradkettigen oder verzweigten aliphatischen Kohlenwasserstoffrest mit 1 bis 12 Kohlenstoffatomen bedeutet, welches dadurch gekennzeichnet ist, daß man

a) Tetraphosphorhexoxid mit mindestens einer Verbindung der allgemeinen Formel (II)

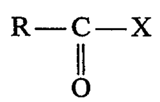

(II)

in welcher R obige Bedeutung hat und X ein $-ONH_4$ oder $-NH_2$ Rest ist, sowie gegebenenfalls Wasser oder einer unter den Reaktionsbedingungen wasserabspaltenden Verbindungen in einer Inertgasatmosphäre und gegebenenfalls in Gegenwart eines inerten Verdünnungsmittels bei erhöhter Temperatur umsetzt, wobei das Molverhältnis von Tetraphosphorhexoxid zu der Verbindung der allgemeinen Formel (II) 1 zu 2 bis 6 beträgt; daß man

b) die 1-Aminoalkan-1,1-diphosphonsäure aus dem Reaktionsgemisch gegebenenfalls nach Abdestillieren des Verdünnungsmittels und nach Abkühlung durch Kristallisation gewinnt.

Das Verfahren der Erfindung ist insbesondere zur Herstellung von solchen Verbindungen der allgemeinen Formel (I) geeignet, in welchen R ein Methyl-, Ethyl-, 2-Ethylhexyl- oder n-Dodecyl-Rest ist.

Einen wesentlichen Verfahrensparameter stellt bei der Durchführung des erfindungsgemäßen Verfahrens das Molverhältnis von Tetraphosphorhexoxid zu den übrigen Reaktionskomponenten dar. Für den Fall, daß man Tetraphosphorhexoxid mit der Verbindung der allgemeinen Formel (II), in welcher X gleich $-ONH_4$ ist, und Wasser oder der wasserabspaltenden Verbindung umsetzt, beträgt das Molverhältnis 1 zu 2 zu 2. Verzichtet man auf den Einsatz von Wasser oder einer besonderen wasserabspaltenden Verbindung, so ist ein Molverhältnis von Tetraphosphorhexoxid zu der Verbindung der allgemeinen Formel (II) von 1 zu 3 einzuhalten. Bei Einhaltung letztgenannten Molverhältnisses fällt außer der 1-Aminoalkan-1,1-diphosphonsäure als Nebenprodukt ein Nitril der Formel RCN an, wobei R die besagte Bedeutung hat. Letzteres kann aus dem Reaktionsgemisch entweder durch Destillation entfernt oder durch Zusatz von phosphoriger Säure in die erwünschte Diphosphonsäure übergeführt werden.

Im Falle der Umsetzung von Tetraphosphorhexoxid mit der Verbindung der allgemeinen Formel (II), wobei X gleich $-NH_2$ ist, sowie Wasser oder der wasserabspaltenden Verbindung ist ein Molverhältnis von 1 zu 2 zu 4 zu berücksichtigen. Auch hier ändert sich das Molverhältnis, wenn auf den Zusatz

von Wasser oder der wasserabspaltenden Verbindung verzichtet wird. Es beträgt dann 1 zu 6. Das dabei ebenfalls als Nebenprodukt anfallende Nitril kann auf die bereits vorbeschriebene Weise eliminiert werden.

Schließlich bestehen weitere Varianten in den Molverhältnissen der Reaktion darin, daß man auch Gemische der Verbindungen der Formel (II) mit X gleich $-ONH_4$ und X gleich $-NH_2$ mit Tetraphosphorhexoxid umsetzt, wobei auf ein Gemisch aus n Molen $RCOONH_4$ und m Molen $RCONH_2$ $(n/3+m/6)$ Mol $P_4O_6$ einzusetzen sind. So werden z. B. pro Mol Tetraphosphorhexoxid 2 Mol der Verbindung der allgemeinen Formel (II), inwelcher X gleich $-ONH_4$ ist, und 2 Mol der Verbindung der allgemeinen Formel (II), in welcher X gleich $-NH_2$ ist, eingesetzt. Für den Fall, daß außer den Verbindungen der Formel (II) auch Wasser oder wasserabspaltende Verbindungen eingesetzt werden, setzt man z. B. pro Mol $P_4O_6$ 1 Mol der Verbindung (II) mit X gleich $-ONH_4$ und 1 Mol der Verbindung (II) mit X gleich $-NH_2$ sowie 3 Mol Wasser oder der wasserabspaltenden Verbindung ein.

Anstelle von Wasser oder der wasserabspaltenden Verbindung kann auch ein Gemisch aus beiden Komponenten dem Reaktionsansatz zugeführt werden.

Eine bevorzugte Ausführungsform der Erfindung besteht darin, daß man die Umsetzung der Ausgangsprodukte bei einer Temperatur von 30—100°C, insbesondere 50 bis 80°C, in Gegenwart von Stickstoff oder $CO_2$ als Inertgas sowie unter Verwendung von aliphatischen oder aromatischen Kohlenwasserstoffen mit einem Siedepunkt bzw. Siedebereich von 80—120°C als Verdünnungsmittel durchführt. Beispiele für geeignete Kohlenwasserstoffe sind Petrolether, Benzol oder Toluol. Andererseits hat sich auch Acetonitril als Verdünnungsmittel gut bewährt. Grundsätzlich hat es sich als zweckmäßig erwiesen, bei den Verfahrensvarianten, bei denen ein Carbonsäurenitril RCN als Nebenprodukt entsteht, dieses Nitril bereits als Verdünnungsmittel einzusetzen.

Schließlich hat es sich als vorteilhaft erwiesen, nach vollständigem Eintragen des Tetraphosphorhexoxids in die vorgelegte Verbindung der allgemeinen Formel (II) das Reaktionsgemisch sich etwa 30 bis 120 Minuten unter Einhaltung der Reaktionstemperatur zu überlassen, anschließend die Temperatur, gegebenenfalls unter Abdestillieren des Verdünnungsmittels, langsam auf 140 bis 200°C zu erhöhen, abzukühlen und aus Wasser oder einem geeigneten Lösungsmittel die 1-Aminoalkan-1,1-diphosphonsäure auszukristallisieren.

Die nach dem Abdestillieren des Verdünnungsmittels anfallende Schmelze ist gelegentlich gelb gefärbt. Eine Entfärbung des Produktes bzw. der entsprechenden wässerigen oder alkoholischen Lösung kann durch Zusatz von etwas $H_2O_2$ bewirkt werden.

Im einzelnen ist zum Verfahren der Erfindung noch folgendes zu bemerken:

Die zahlreichen möglichen Ausführungsformen des erfindungsgemäßen Verfahrens lassen sich in folgenden Reaktionsgleichungen 1 bis 13 darstellen:

1) $P_4O_6 + 2\,RCOONH_4 + 2\,H_2O \rightarrow 2\,R-C(PO_3H_2)_2 \cdot NH_2$
2) $P_4O_6 + 2\,RCOONH_4 + 2\,HCOOH \rightarrow 2\,R-C(PO_3H_2)_2NH_2 + CO$
3) $P_4O_6 + 3\,RCOONH_4 \rightarrow 2\,R-C(PO_3H_2)_2NH_2 + RCN$
4) $P_4O_6 + 3\,RCOONH_4 + 2\,H_3PO_3 \rightarrow 3\,R-C(PO_3H_2)_2NH_2$
5) $P_4O_6 + 2\,RCONH_2 + 4\,H_2O \rightarrow 2\,R-C(PO_3H_2)_2NH_2$
6) $P_4O_6 + 2\,RCONH_2 + 4\,HCOOH \rightarrow 2\,R-C(PO_3H_2)_2NH_2 + 4\,CO$
7) $P_4O_6 + 6\,RCONH_2 \rightarrow 2\,R-C(PO_3H_2)_2NH_2 + 4\,RCN$
8) $P_4O_6 + 6\,RCONH_2 + 8\,H_3PO_3 \rightarrow 6\,R-C(PO_3H_2)_2NH_2$
9) $P_4O_6 + RCOONH_4 + RCONH_2 + 3\,H_2O \rightarrow 2\,R-C(PO_3H_2)_2NH_2$
10) $P_4O_6 + RCOONH_4 + RCONH_2 + 3\,HCOOH \rightarrow 2\,R-C(PO_3H_2)_2NH_2 + 3\,CO$
11) $P_4O_6 + 2\,RCOONH_4 + 2\,RCONH_2 \rightarrow 2\,R-C(PO_3H_2)_2NH_2 + 2\,RCN$
12) $P_4O_6 + 2\,RCOONH_4 + 2\,RCONH_2 + 4\,H_3PO_3 \rightarrow 4\,R-C(PO_3H_2)_2NH_2$
13) $P_4O_6 + 2\,RCOONH_4 + H_2O + HCOOH \rightarrow 2\,R-C(PO_3H_2)_2NH_2 + CO$

Die Verwendung von $P_4O_6$ als Ausgangsprodukt beim Verfahren der Erfindung war nicht naheliegend. Bekanntlich verläuft die Hydrolyse des Tetraphosphorhexoxids, welche auch bei vorliegendem Verfahren stattfindet, stufenweise über verschiedene polyphosphorige Säuren, von denen insbesondere diejenigen mit Kondensationsgraden von mehr als 2 thermisch nicht stabil sind und sich in Oxidoreduktionsreaktionen unter Bildung von gelb-orange gefärbten Phosphorsuboxiden, Phosphorwasserstoff und verschiedenen Phosphor-(V)-säuren zersetzen. Diese Zersetzung, die schon bei Temperaturen von >— 10°C nachweisbar ist, läuft oberhalb von 50°C sogar schneller ab als die Hydrolyse.

Mit dem Auftreten von Temperaturen um 50°C und höher muß aber bei der Umsetzung von Tetraphosphorhexoxid mit den im allgemeinen festen Ammoniumsalzen von Carbonsäuren bzw. den entsprechenden Carbonsäureamiden gerechnet werden, da einerseits das Eintreten der Reaktion mit einiger Wahrscheinlichkeit erst oberhalb des Schmelzpunktes eines der Reaktanden zu erwarten ist, andererseits eine rasche Abführung der Reaktionswärme der vermutlich stark exothermen Umsetzung aus dem einen hohen Feststoffanteil enthaltenden heterogenen Reaktionsgemisch schwierig sein dürfte. Insofern war es für den Fachmann nicht empfehlenswert, Tetraphosphorhexoxid als Ausgangsprodukt für das erfindungsgemäße Verfahren zu wählen. Die zu erwartenden Schwierigkeiten konnten durch den Zusatz von Wasser bzw. einer wasserabspaltenden Verbindung zum Reaktionsansatz bzw.

durch den Einsatz der Verbindungen der allgemeinen Formel (II) in solchen Molverhältnissen zu $P_4O_6$, daß das aus den Verbindungen der allgemeinen Formel (II) abspaltbare $H_2O$ zur vollständigen Hydrolyse des $P_4O_6$ ausreichend ist, vermieden werden.

Das Verfahren der Erfindung ist als technisch fortschrittlich zu bezeichnen, da es als Ausgangsprodukte technisch leicht zugängliche Verbindungen vorsieht und das erwünschte Verfahrensprodukt in wesentlich höherer Ausbeute als beim Verfahren der DE-PS 2 048 913 erhalten wird.

## Beispiel 1

In einem Rührgefäß wurde unter Stickstoffatmosphäre ein Gemisch aus 40,5 g (0,525 Mol) Ammoniumacetat und 9 g (0,5 Mol) Wasser vorgelegt und mit Hilfe eines Heizbades auf ca. 26° C vorgewärmt. Aus einem heizbaren Tropftrichter wurden im Verlaufe von 3 Stunden 55 g (0,25 Mol) aufgeschmolzenes $P_4O_6$ mit einer Temperatur von ca. 26° C in das Rührgefäß eindosiert. Dabei stieg die Temperatur des Reaktionsgemisches sogleich auf über 30° C und im Verlaufe der weiteren Dosierung auf ca. 50° C an. Das gegen Ende der $P_4O_6$-Zugabe sehr viskose Gemisch wurde zur Erhaltung der Rührfähigkeit durch äußere Heizung auf eine Temperatur von 70° C gebracht, nach beendeter Zugabe von $P_4O_6$ eine Stunde bei dieser Temperatur gehalten und schließlich langsam auf 160° C aufgeheizt. Dabei trat eine Gelbfärbung des bis dahin farblosen Produktes ein. Nach Abkühlung auf ca. 80° C wurde das Produkt in 100 ml Wasser aufgenommen und die durch ungelöste Feststoffanteile trübe gelbe Flüssigkeit mit Wasserstoffperoxid (30%ig) versetzt, bis eine klare Lösung entstand. Aus der eingeengten und mit wenig Isopropanol versetzten Lösung wurden nach Abnutschen und Trocknung 45 g eines weißen Kristallisats erhalten, das aufgrund des $^{31}P$-NMR-Spektrums als 1-Amino-ethan-1,1-diphosphonsäure identifiziert wurde.

## Beispiel 2

Es wurde analog Beispiel 1 verfahren, wobei jedoch ein Gemisch aus 40,5 g (0,525 Mol) Ammoniumacetat und 23 g (0,5 Mol) Ameisensäure mit 55 g (0,25 Mol) $P_4O_6$ umgesetzt wurde. Dabei wurden 45 g 1-Aminoethan-1,1-diphosphonsäure erhalten.

## Beispiel 3

In einem mit Stickstoff gefüllten Rührkolben mit Destillationsaufsatz wurden 48,8 g (0,63 Mol) Ammoniumacetat in 68 g (1,66 Mol) Acetonitril suspendiert und unter Rückfluß auf ca. 80° C erwärmt. In die siedende Mischung wurden 46,4 g (0,21 Mol) geschmolzenes $P_4O_6$ eingetropft, wobei die Temperatur bei 80—90° C gehalten wurde. Unter langsamer Steigerung der Temperatur auf 160° C wurde über eine kurze Kolonne bei einer Kopftemperatur von 84—89° C 85,1 g eines Destillats mit einem Gehalt an Acetonitril von 91,5% und an Essigsäure von 8,2% abgezogen, was einer Menge von 77,9 (190 Mol) Acetonitril und 7,0 g (0,12 Mol) Essigsäure entspricht. Nach Abzug des vorgelegten Acetonitrils wurden also 11,9 g (0,24 Mol) Acetonitril als Nebenprodukt gewonnen. Das Acetonitril-Essigsäure-Gemisch kann nach Umsetzung der Essigsäure zu Ammoniumacetat in den Prozeß zurückgeführt werden. Aus dem im Kolben verbliebenen farblosen festen Rückstand wurden nach kurzem Aufkochen in einem Ethanol-Wasser-Gemisch (4 : 1) 57,1 g 1-Aminoethan-1,1-diphosphosäure entsprechend einer Ausbeute von 66% gewonnen.

## Beispiel 4

In einem Rührkolben mit Destillationsaufsatz wurden unter Stickstoffatmosphäre 83,6 g (1,416 Mol) Acetamid bei ca. 40° C in 45,4 (1,1 Mol) Acetonitril gelöst. In diese Lösung wurden bei 40—55° C 52 g (0,236 Mol) $P_4O_6$ eingetropft. Danach wurde die Temperatur des Reaktionsgemisches langsam auf 163° C gesteigert und gleichzeitig bei einer Kopftemperatur von 81—85° C 85,4 g eines Destillats abgenommen, das 96,4% Acetonitril und 3,5% Essigsäure enthielt, entsprechend einer Menge von 82,3 g (2,008 Mol) Acetonitril und 3,0 g (0,05 Mol) Essigsäure. Nach Abzug des vorgelegten Acetonitrils verblieben 36,9 g (0,908 Mol) Acetonitril als Nebenprodukt. Aus dem im Kolben verbliebenen gelben Rückstand wurden nach Oxidation mit $H_2O_2$ und Aufkochen in Ethanol-Wasser 4 : 1 60,1 g farblose, kristalline 1-Aminoethan-1,1-diphosphonsäure gewonnen, entsprechend einer Ausbeute von 60%.

## Beispiel 5

29,5 g Acetamid (0,5 Mol) wurden in 18 g Wasser (1,0 Mol) gelöst und die Lösung auf 80° C erwärmt. Nach dem Eintropfen von 55 g geschmolzenem Tetraphosphorhexoxid (0,25 Mol) wurde die Mischung 30 Minuten bei 80° C gehalten und danach im Verlauf von 2 Stunden auf 162° C erhitzt. Bei dieser Temperatur erstarrte das Reaktionsgemisch zu einer festen Masse. Nach dem Abkühlen wurde das Produkt mit 13,4 g Wasser und 15,4 g Wasserstoffperoxid versetzt und schließlich mit 76 g eines Ethanol-Wasser-Gemisches im Gewichtsverhältnis 7 : 1 verrührt. Nach Absaugen der Flüssigkeit und

Trocknen des Feststoffes wurden 82 g 1-Aminoethan-1,1-diphosphonsäure erhalten, entsprechend einer Ausbeute von 80%, bezogen auf eingesetztes $P_4O_6$.

Beispiel 6

In einem Rührgefäß wurden unter Stickstoffatmosphäre 9,0 g (0,5 Mol) Wasser, 68,06 g (0,83 Mol) phosphorige Säure und 39,3 g (0,5 Mol) 98%iges Ammoniumacetat vorgelegt. Zu der resultierenden Lösung wurden aus einem heizbaren Tropftrichter innerhalb 15 Minuten 54,97 g (0,25 Mol) aufgeschmolzenes $P_4O_6$ mit einer Temperatur von ca. 30° C dosiert, wobei die Temperatur des Reaktionsgemisches unterhalb 50° C gehalten wurde. Während der $P_4O_6$-Zugabe erhöhte sich die Viskosität des Gemisches, während die Rührfähigkeit jedoch erhalten blieb. Nach anschließender Zugabe von 30 g (0,146 Mol) 1-Amino-ethan-1,1-diphosphonsäure wurde die Temperatur des Reaktionsgemisches langsam auf 165° C gesteigert und 90 Minuten bei 165±5° C gehalten. Die nach Abkühlen auf ca. 80° C erhaltene Kristallsuspension wurde mit 100 ml destilliertem Wasser versetzt und unter Rühren auf Raumtemperatur abgekühlt. Nach Abnutschen und Trocknen wurden 111,9 g eines weißen Kristallisats erhalten, welches dünnschichtchromatographisch als 1-Amino-ethan-1,1-di-phosphonsäure identifiziert wurde. Unter Berücksichtigung der eingesetzten Menge 1-Amino-ethan-1,1-diphosphonsäure verblieben als Ausbeute 81,9 g; das entspricht 79,9% der Theorie, bezogen auf eingesetztes Ammoniumacetat.

Nach destillativer Entwässerung des klaren Filtrats im Vakuum-Rotationsverdampfer wurden 88,95 g einer viskosen Flüssigkeit erhalten mit folgender Zusammensetzung:

94,8 Gew.-% phosphorige Säure
1,0 Gew.-% Phosphorsäure
4,2 Gew.-% 1-Amino-ethan-1,1-diphosphonsäure

Das so gewonnene entwässerte Filtrat kann in dem Folgeansatz wieder eingesetzt werden.

**Patentansprüche**

1. Verfahren zur Herstellung von 1-Aminoalkan-1,1-di-phosphonsäuren der allgemeinen Formel (I)

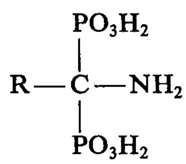

(I)

in welcher R einen geradkettigen oder verzweigten aliphatischen Kohlenwasserstoffrest mit 1 bis 12 Kohlenstoffatomen bedeutet, dadurch gekennzeichnet, daß man

a) Tetraphosphorhexoxid mit mindestens einer Verbindung der allgemeinen Formel (II)

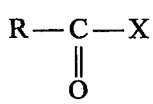

(II)

in welcher R obige Bedeutung hat und X ein $-ONH_4$ oder $-NH_2$ Rest ist, sowie gegebenenfalls Wasser oder einer unter den Reaktionsbedingungen wassserabspaltenden Verbindung in einer Inertgasatmosphäre und gegebenenfalls in Gegenwart eines inerten Verdünnungsmittels bei erhöhter Temperatur umsetzt, wobei das Molverhältnis von Tetraphosphorhexoxid zu der Verbindung der allgemeinen Formel (II) 1 zu 2 bis 6 beträgt; und daß man

b) die 1-Aminoalkan-1,1-diphosphonsäure aus dem Reaktionsgemisch gegebenenfalls nach Abdestillieren des Verdünnungsmittels und nach Abkühlung durch Kristallisation gewinnt.

2. Verfahren nach Anspruch 1, dadurch gekennzeichnet, daß der Substituent R ein Methyl-, Ethyl-, 2-Ethylhexyl- oder n-Dodecyl-Rest bedeutet.

3. Verfahren nach Anspruch 1 oder 2, dadurch gekennzeichnet, daß man Tetraphosphorhexoxid mit der Verbindung der allgemeinen Formel (II), in welcher X gleich $-ONH_4$ ist und Wasser oder der wasserabspaltenden Verbindung im Molverhältnis von 1 zu 2 zu 2 umsetzt.

4. Verfahren nach Anspruch 1 oder 2, dadurch gekennzeichnet, daß man Tetraphosphorhexoxid mit der Verbindung der allgemeinen Formel (II), in welcher X gleich $-ONH_4$ ist, im Molverhältnis 1 zu 3 umsetzt.

5. Verfahren nach Anspruch 1 oder 2, dadurch gekennzeichnet, daß man Tetraphosphorhexoxid mit

der Verbindung der allgemeinen Formel (II), in welcher X gleich $-NH_2$ ist, und Wasser oder der wasserabspaltenden Verbindung im Molverhältnis von 1 zu 2 zu 4 umsetzt.

6. Verfahren nach Anspruch 1 oder 2, dadurch gekennzeichnet, daß man Tetraphosphorhexoxid mit der Verbindung der allgemeinen Formel (II), in welcher X gleich $-NH_2$ ist, im Molverhältnis 1 zu 6 umsetzt.

7. Verfahren nach Anspruch 1 oder 2, dadurch gekennzeichnet, daß man pro Mol Tetraphosphorhexoxid 1 Mol der Verbindung der allgemeinen Formel (II), in welcher X gleich $-ONH_4$ ist und 1 Mol der Verbindung der allgemeinen Formel (II), in welcher X gleich $-NH_2$ ist, sowie 3 Mol Wasser oder der wasserabspaltenden Verbindung einsetzt.

8. Verfahren nach Anspruch 1 oder 2, dadurch gekennzeichnet, daß man Tetraphosphorhexoxid mit einem Gemisch aus einer Verbindung der allgemeinen Formel (II), in welcher X gleich $-ONH_4$ ist und einer Verbindung der allgemeinen Formel (II), in welcher X gleich $-NH_2$ ist, umsetzt, wobei auf ein Gemisch aus n Molen $RCOONH_4$ und m Molen $RCONH_2$ $(n/3 + m/6)$ Mole $P_4O_6$ eingesetzt werden.

9. Verfahren nach Anspruch 8, dadurch gekennzeichnet, daß man pro Mol Tetraphosphorhexoxid 2 Mol der Verbindung der allgemeinen Formel (II), in welcher X gleich $-ONH_4$ ist und 2 Mol der Verbindung der allgemeinen Formel (II), in welcher X gleich $-NH_2$ ist, einsetzt.

10. Verfahren nach Anspruch 1 bis 9, dadurch gekennzeichnet, daß man ein Gemisch aus Wasser und einer wasserabspaltenden Verbindung einsetzt.

11. Verfahren nach Anspruch 1 bis 10, dadurch gekennzeichnet, daß man die Umsetzung bei einer Temperatur von 30 bis 100° C, insbesondere 50—80° C, durchführt.

12. Verfahren nach Anspruch 1 bis 11, dadurch gekennzeichnet, daß man als Inertgas Stickstoff oder $CO_2$ verwendet.

13. Verfahren nach Anspruch 1 bis 12, dadurch gekennzeichnet, daß man als Verdünnungsmittel aliphatische oder aromatische Kohlenwasserstoffe mit einem Siedepunkt bzw. Siedebereich von 80 bis 120° C einsetzt.

14. Verfahren nach Anspruch 13, dadurch gekennzeichnet, daß das Verdünnungsmittel Petrolether, Benzol, Toluol oder Acetonitril ist.

15. Verfahren nach Anspruch 1 bis 14, dadurch gekennzeichnet, daß man die Lösung des schmelzförmigen Destillationsrückstandes durch Zusatz von $H_2O_2$ entfärbt.

16. Verfahren nach Anspruch 1 bis 15, dadurch gekennzeichnet, daß man nach vollständigem Eintragen des Tetraphosphorhexoxids in die vorgelegte Verbindung der allgemeinen Formel (II) das Reaktionsgemisch sich etwa 30 bis 120 Minuten unter Einhaltung der Reaktionstemperatur überläßt, anschließend die Temperatur, gegebenenfalls unter Abdestillieren des Verdünnungsmittels, langsam auf 140°C bis 200°C erhöht, abkühlt und aus Wasser oder einem geeigneten Lösungsmittel die 1-Aminoalkan-1,1-diphosphonsäure auskristallisiert.

**Claims**

1. Process for making 1-aminoalkane-1,1-diphosphonic acids of the general formula (I)

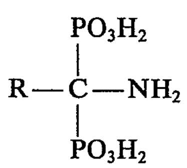

(I)

in which R stands for straight or branched aliphatic hydrocarbon radical having from 1 to 12 carbon atoms, which comprises:

a) reacting tetraphosphorus hexoxide with at least one compound of the general formula (II)

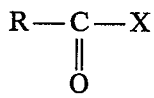

(II)

in which R has the meaning given above and X stands for an $-ONH_4$ or $NH_2$-radical, and, if desired, with water or a compound yielding water under the reaction conditions, in inert gas atmosphere and optionally in the presence of an inert diluent at elevated temperature, the molar ratio of tetraphosphorus hexoxide to the compound of general formula (II) being 1 to 2—6; and

b) recovering the 1-aminoalkane-1,1-diphosphonic acid from the reaction mixture by crystallization, if desired after distillative removal of the diluent and after cooling.

2. Process as claimed in claim 1, wherein the substituent R stands for a methyl, ethyl, 2-ethylhexyl or n-dodecyl radical.

3. Process as claimed in claim 1 or 2, wherein tetraphosphorus hexoxide is reacted with the compound of general formula (II) in which X stands for $-ONH_4$, and water or the compound yielding water, in a molar ratio 1 : 2 : 2.

4. Process as claimed in claim 1 or 2, wherein tetraphosphorus hexoxide is reacted with the compound of general formula (II) in which X stands for $-ONH_4$, in the molar ratio of 1 : 3.

5. Process as claimed in claim 1 or 2, wherein tetraphosphorus hexoxide is reacted with the compound of general formula (II) in which X stands for $-NH_2$, and water or the compound yielding water in a molar ratio of 1 : 2 : 4.

6. Process as claimed in claim 1 or 2, wherein tetraphosphorus hexoxide is reacted with the compound of general formula (II) in which X stands for $-NH_2$, in the molar ratio of 1 : 6.

7. Process as claimed in claim 1 or 2, wherein 1 mol of the compound of general formula (II), in which X stands for $-ONH_4$, and 1 mol of the compound of general formula (II), in which X stands for $-NH_2$, and 3 mols of water or compound yielding water are used per mol tetraphosphorus hexoxide.

8. Process as claimed in claim 1 or 2, wherein tetraphosphorus hexoxide is reacted with a blend of a compound of general formula (II), in which X stands for $-ONH_4$, and a compound of general formula (II), in which X stands for $-NH_2$, (n/3 + m/6) mols $P_4O_6$ being used for a mixture formed of n mols $RCOONH_4$ and m mols $RCONH_2$.

9. Process as claimed in claim 8, wherein 2 mols of the compound of general formula (II), in which X stands for $-ONH_4$, and 2 mols of the compound of general formula (II), in which X stands for $NH_2$, are used per mol tetraphosphorus hexoxide.

10. Process as claimed in claims 1 to 9, wherein a blend of water and compound yielding water is used.

11. Process as claimed in claims 1 to 10, wherein the reaction is effected at a temperatur of 30 to 100° C, especially 50 to 80° C.

12. Process as claimed in claims 1 to 11, wherein the inert gas is nitrogen or $CO_2$.

13. Process as claimed in claims 1 to 12, wherein aliphatic or aromatic hydrocarbons with a boiling point or range of 80 to 120° C are used as diluents.

14. Process as claimed in claim 13, wherein the diluent is petroleum ether, benzene, toluene or acetonitrile.

15. Prozess as claimed in claims 1 to 14, wherein the solution of the melt-like distillation residue is decolorized by the addition of $H_2O_2$.

16. Process as claimed in claims 1 to 15, wherein, after complete introduction of tetraphosphorus hexoxide into the compound of general formula (II), the reaction mixture is allowed to stand over a period of about 30 to 120 minutes while maintaining the reaction temperature, which is then gradually increased to 140—200° C with distillative removal of the diluent, if desired, the whole is cooled and the 1-aminoalkane-1,1-diphosphonic acid is crystallized out from water or a suitable solvent.

**Revendications**

1. Procédé de préparation d'acides amino-1-alcanediphosphoniques-1,1 de formule générale (I) suivante:

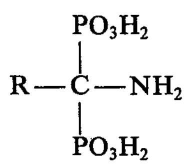

(I)

dans laquelle R représente un radical d'hydrocarbure aliphatique en $C_1-C_{12}$ linéaire ou ramifié, caractérisé en ce que:

a) on fait réagir l'hexoxyde tétraphosphoreux avec au moins un composé de formule générale (II) suivante

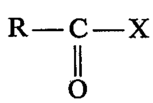

(II)

dans laquelle R a la signification ci-dessus et X représente un radical $-ONH_4$ ou $-NH_2$ et, éventuellement, de l'eau ou un composé cédant de l'eau dans les conditions réactionnelles, en atmosphère de gaz inerte et, éventuellement en présence d'un diluant inerte à température élevée, le rapport molaire hexoxyde tétraphosphoreux/composé de formule générale (II) étant de 1 à 2—6 et en ce que

b) on récupère l'acide amino-1-alcanediphosphonique-1,1 du mélange de réaction, éventuellement après élimination du diluant par distillation et après refroidissement par cristallisation.

2. Procédé selon la revendication 1, caractérisé en ce que le substituant R représente un radical méthyle, éthyle, 2-éthyl-hexyle ou n-dodécyle.

3. Procédé selon la revendication 1 ou 2, caractérisé en ce que l'on fait réagir l'hexoxyde tétraphosphoreux avec le composé de formule générale (II), dans laquelle X représente le radical $-ONH_4$, et l'eau ou le composé cédant de l'eau dans un rapport molaire de 1 : 2 : 2.

4. Procédé selon la revendication 1 ou 2, caractérisé en ce que l'on fait réagir l'hexoxyde tétraphosphoreux avec le composé de formule générale (II), dans laquelle X représente le radical $-ONH_4$, dans le rapport molaire de 1 : 3.

5. Procédé selon la revendication 1 ou 2, caractérisé en ce que l'on fait réagir l'hexoxyde tétraphosphoreux avec le composé de formule générale (II), dans laquelle X représente le radical $-NH_2$, et l'eau le composé cédant de l'eau dans un rapport molaire de 1 : 2 : 4.

6. Procédé selon la revendication 1 ou 2, caractérisé en ce que l'on fait réagir l'hexoxyde tétraphosphoreux avec le composé de formule générale (II), dans laquelle X représente le radical $-NH_2$, dans un rapport molaire de 1 : 6.

7. Procédé selon la revendication 1 ou 2, caractérisé en ce que l'on utilise I mole du composé répondant à la formule générale (II), dans laquelle X représente le radical $-ONH_4$ et 1 mole du composé répondant à la formule générale (II), dans laquelle X représente le radical $-NH_2$, ainsi que 3 moles d'eau ou du composé cédant de l'eau par mole d'hexoxyde tétraphosphoreux.

8. Procédé selon la revendication 1 ou 2, caractérisé en ce que l'on fait réagir l'hexoxyde tétraphosphoreux avec un mélange d'un composé de formule générale (II), dans laquelle X représente le radical $-ONH_4$, et d'un composé de formule générale (II), dans laquelle X représente le radical $-NH_2$, en utilisant $(n/3 + m/6)$ moles de $P_4O_6$ pour un mélange de n moles de $RCOONH_4$ et m moles de $RCONH_2$.

9. Procédé selon la revendication 8, caractérisé en ce que, l'on utilise 2 moles du composé de formule générale (II), dans laquelle X représente le radical $-ONH_4$, et 2 moles du composé de formule générale (II), dans laquelle X représente le radical $-NH_2$ par mole d'hexoxide tétraphosphoreux.

10. Procédé selon les revendication 1 à 9, caractérisé en ce que l'on utilise un mélange d'eau et d'un composé cédant de l'eau.

11. Procédé selon les revendications 1 à 10, caractérisé en ce que l'on effectue la réaction à une température de 30 à 100° C, de préférence 50 à 80° C.

12. Procédé selon les revendications 1 à 11, caractérisé en ce que l'on utilise l'azote ou le $CO_2$ comme gaz inerte.

13. Procédé selon les revendications 1 à 12, caractérisé en ce que l'on utilise comme diluant des hydrocarbures aliphatiques ou aromatiques d'un point ou d'une gamme d'ébullition de 80 à 120° C.

14. Procédé selon la revendication 13, caractérisé en ce que l'on utilise comme diluant l'éther de pétrole, le benzène, le toluène ou l'acétonitrile.

15. Procédé selon les revendications 1 à 14, caractérisé en ce que l'on décolore la solution du résidu de distillation ayant l'aspect d'une masse fondue par addition de $H_2O_2$.

16. Procédé selon les revendications 1 à 15, caractérisé en ce que, aprés l'introduction complète de l'hexoxyde tétraphosphoreux dans le composé de formule générale (II) chargé initialement, on laisse le mélange reposer pendant environ 30 à 120 min en respectant la temperature de réaction, on augmente lentement ensuite la température à 140—200° C, éventuellement avec élimination du diluant par distillation, on refroidit et on sépare à l'état cristallin l'acide amino-1-alcane-diphosphonique-1,1 par cristallisation dans l'eau ou dans un solvant convenable.